# DEMANDE DE BREVET EUROPEEN

(11) **EP 1 080 679 A1**
(43) Date de publication de la demande: **07.03.2001**
(21) Numéro de dépôt: 00402348.7
(22) Date de dépôt: 23.08.2000
(51) Int. Cl.: A47J 43/07

(54) **Trémie d'alimentation d'une machine de traitement de produits alimentaires**

(30) Priorité: 03.09.1999 FR 9911092
(71) Demandeur: Dito Sama, 23200 Aubusson (FR)
(72) Inventeur: Paturel, Bruno, 23200 Aubusson (FR); Musseau, Joel, 23200 Aubusson (FR)
(74) Mandataire: Habasque, Etienne Joel Jean-François

(57) **Abrégé**

Cette trémie comportant dans sa partie supérieure une portion de chargement (5) des produits munie de moyens en forme de goulotte (6) de réception de ceux-ci, en saillie latérale par rapport au reste de la trémie et dans sa partie inférieure, une portion de guidage (7) des produits, est caractérisée en ce que la portion de chargement (5) et la portion de guidage (7) sont formées par deux pièces distinctes et séparées dont les bords en regard comportent des moyens complémentaires de fixation (10,11,12,13,14), démontables par un utilisateur pour permettre une séparation de celles-ci et autorisant différentes positions angulaires de montage de la portion de chargement (5) des produits par rapport à la portion de guidage (7) de ceux-ci, pour permettre une adaptation de la position angulaire des moyens en forme de goulotte (6) par rapport au bâti de la machine.

## Description

La présente invention concerne une trémie d'alimentation d'une machine de traitement de produits alimentaires.

Plus particulièrement, l'invention se rapporte à une trémie qui est adaptée pour être fixée sur le bâti de la machine, dans lequel sont disposés des moyens de traitement des produits, la trémie comportant dans sa partie supérieure une portion de chargement des produits et dans sa partie inférieure, une portion de guidage des produits en direction des moyens de traitement de ceux-ci, dans le bâti de la machine.

Cette machine de traitement de produits peut par exemple être une machine de coupe de ceux-ci et l'outil de traitement est alors un outil de coupe.

Une telle machine et une telle trémie ont déjà été décrites dans de nombreux documents de l'état de la technique.

Ainsi par exemple, le document FR-A-1 342 465 décrit une telle machine qui comporte une trémie d'alimentation dans laquelle tourne un agitateur entraîné par l'arbre d'entraînement de l'outil.

Cette trémie comporte dans sa partie supérieure, une portion cylindrique de chargement des produits équipée d'organes de sécurité formant chicane.

Dans sa partie inférieure, cette trémie présente la forme d'un entonnoir de guidage des produits qui débouche par un conduit centré, sur l'outil de traitement des produits.

Une autre trémie de ce type a été décrite dans le document FR-A-2 682 865, mais dans ce document, la portion de guidage des produits débouche par un conduit excentré sur l'outil.

D'autres documents, comme par exemple le document DE-A-2 752 211, décrivent des trémies d'alimentation dont la portion de chargement des produits est munie de moyens en forme de goulotte de réception de ceux-ci, en saillie latérale par rapport au reste de la trémie.

Cependant, toutes ces trémies présentent un certain nombre d'inconvénients, car elles sont réalisées sous la forme d'un ensemble unique, ce qui pose des problèmes d'entretien de celles-ci et notamment de nettoyage de l'intérieur de ces trémies, et de manutention en raison de leur encombrement et de leur poids.

De plus, une telle structure peut également rendre difficile l'implantation de la machine, par exemple dans une cuisine, un laboratoire, etc.

Le document US-A-5 784 954 décrit une trémie conforme au préambule de la revendication 1 mais qui pose des problèmes de sécurité de fonctionnement.

Le but de l'invention est donc de résoudre ces problèmes.

A cet effet, l'invention a pour objet une trémie d'alimentation d'une machine de traitement de produits alimentaires, adaptée pour être fixée sur le bâti de la machine dans lequel sont disposés des moyens de traitement des produits, la trémie comportant dans sa partie supérieure une portion de chargement des produits munie de moyens en forme de goulotte de réception de ceux-ci, en saillie latérale par rapport au reste de la trémie et dans sa partie inférieure, une portion de guidage des produits en direction des moyens de traitement de ceux-ci, dans le bâti de la machine, caractérisée en ce que la portion de chargement et la portion de guidage de la trémie sont formées par deux pièces distinctes et séparées dont les bords en regard comportent des moyens complémentaires de fixation, démontables par un utilisateur pour permettre une séparation de celles-ci et autorisant différentes positions angulaires de montage de la portion de chargement des produits par rapport à la portion de guidage de ceux-ci, pour permettre une adaptation de la position angulaire des moyens en forme de goulotte par rapport au bâti de la machine, en ce que les moyens de fixation correspondants de la portion de chargement de la trémie sont associés à une virole disposée autour de celle-ci, en ce que cette portion de chargement peut être placée dans différentes positions angulaires par rapport à cette virole, et en ce que la virole est associée à des moyens d'interdiction du démarrage de la machine tant que la portion de chargement de la trémie n'est pas en position correcte de montage sur la portion de guidage de celle-ci.

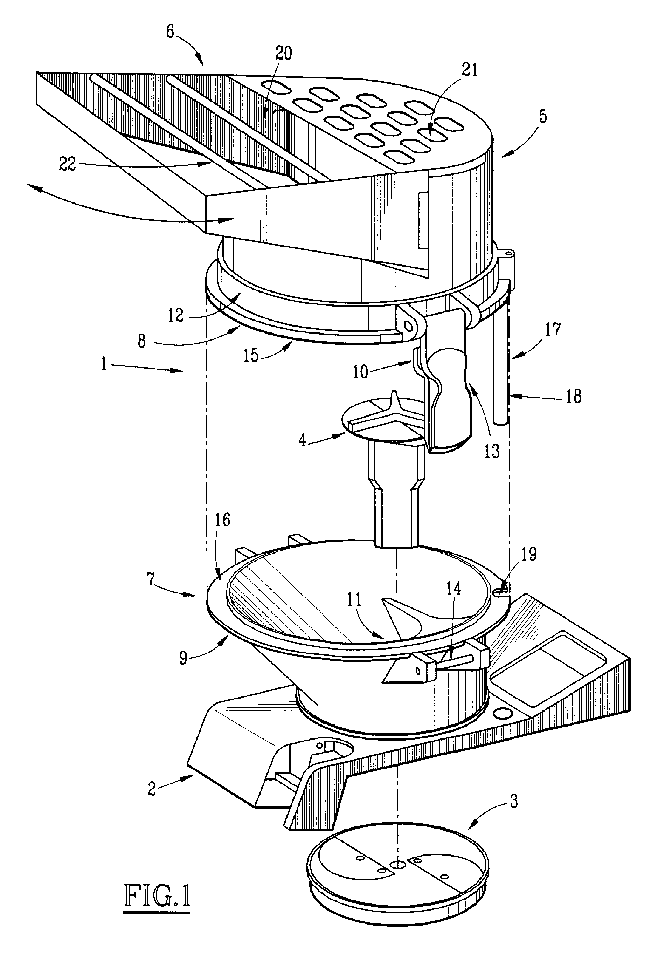

L'invention sera mieux comprise à la lecture de la description qui va suivre, donnée uniquement à titre d'exemple et faite en se référant aux dessins annexés, sur lesquels
- la Fig.1 représente une vue en perspective illustrant une trémie d'alimentation selon l'invention, dans laquelle les deux parties de celle-ci sont représentées en position démontée; et

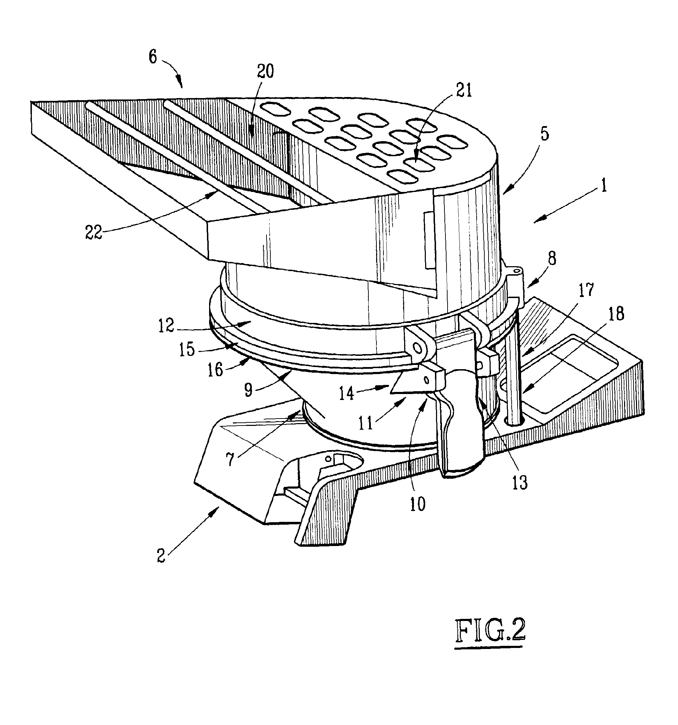

- la Fig.2 représente une vue en perspective de la trémie d'alimentation selon l'invention, dans laquelle les deux parties de celle-ci sont représentées en position montée.

On reconnaît en effet sur ces figures, une trémie d'alimentation d'une machine de traitement de produits alimentaires, cette trémie étant désignée par la référence générale 1.

Cette trémie est adaptée pour être fixée sur le bâti d'une machine dans laquelle sont disposés des moyens de traitement de produits.

En fait, cette trémie 1 peut être associée au couvercle 2 de la machine dans laquelle tourne un outil par exemple de coupe des produits, désigné par la référence générale 3.

Un agitateur désigné par la référence générale 4 est par exemple disposé dans la trémie et peut être entraîné en rotation par exemple par le même arbre d'entraînement que l'outil de coupe 3.

La trémie selon l'invention comporte dans sa partie supérieure, une portion de chargement de produits, désignée par la référence générale 5, munie de moyens en forme de goulotte de réception de ceux-ci, désignés par la référence générale 6, en saillie latérale par rapport au reste de la trémie, et dans sa partie inférieure, une portion de guidage des produits en direction des moyens de traitement de ceux-ci dans le bâti de la machine, cette portion de guidage étant désignée par la référence générale 7.

En fait, la portion de chargement 5 et la portion de guidage 7 de la trémie sont formées, par deux pièces distinctes et séparées dont les bords en regard, par exemple 8 et 9, comportent des moyens complémentaires de fixation, par exemple 10 et 11, démontables par un utilisateur pour permettre une séparation de celles-ci et autorisant différentes positions angulaires de montage de la portion de chargement des produits désignée par la référence générale 5, par rapport à la portion de guidage de ceux-ci désignée par la référence générale 7, pour permettre une adaptation de la position angulaire des moyens en forme de goulotte 6 par rapport au bâti de la machine.

En fait, les moyens de fixation correspondants de la portion de chargement 5 de la trémie sont associés à une virole désignée par la référence générale 12 sur ces figures, disposée autour de celle-ci et cette portion de chargement 5 peut être placée dans différentes positions angulaires par rapport à cette virole 12.

Ainsi par exemple, cette portion de chargement 5 de la trémie peut être reliée à la virole 12 par des moyens de vissage autorisant la fixation de cette portion de chargement dans diverses orientations angulaires sur la virole.

Cette portion de chargement peut également être libre en rotation par rapport à la virole, ce qui permet son orientation.

Dans l'exemple de réalisation décrit sur cette figure, les moyens complémentaires de fixation de la virole 12 et de la portion de guidage 7 de la trémie comprennent des verrous à franchissement de point dur, dont l'un est désigné par la référence générale 13 sur ces figures, associés par exemple à la virole 12 et adaptés pour coopérer avec des moyens de butée complémentaires par exemple 14 de la portion de guidage 7 de la trémie.

Bien entendu, l'inverse peut également être envisagé, c'est-à-dire que les verrous à franchissement de point dur peuvent être associés à la portion de guidage 7 de la trémie, tandis que les moyens de butée complémentaires peuvent être associés à la virole 12.

Ces bords en regard des deux parties de la trémie comportent alors des surfaces de contact en regard, désignées par exemple par les références 15 et 16.

Il va de soi bien entendu que des moyens de fixation de ce type peuvent être régulièrement répartis autour de la trémie et que ceux-ci peuvent par exemple comporter deux verrous à franchissement de point dur et deux moyens de butée complémentaires diamétralement opposés.

De plus, la virole 12 est associée à des moyens 17 d'interdiction du démarrage de la machine tant que la portion de chargement de la trémie désignée par la référence générale 5, n'est pas en position correcte de montage sur la portion de guidage 7 de celle-ci.

Ces moyens d'interdiction comprennent par exemple un détecteur de présence en position correcte de montage d'une tige 18 associée à la virole 12 de la portion de chargement de la trémie, cette tige 18 étant adaptée pour s'étendre dans une encoche par exemple 19 de la portion de guidage 7 de la trémie lorsque la portion de chargement de celle-ci est en position correcte de montage sur la portion de guidage, pour coopérer avec un détecteur associé au bâti de la machine et disposé par exemple au niveau du couvercle de celle-ci.

Ce détecteur peut par exemple être un détecteur magnétique.

On notera également que la portion de chargement de la trémie désignée par la référence générale 5 est associée à des moyens d'obturation partielle de celle-ci, désignés par la référence générale 20 sur ces figures, autorisant le passage des produits mais interdisant l'accès à l'intérieur de la trémie à un utilisateur pour des raisons de sécurité.

Ces moyens d'obturation peuvent alors comporter par exemple une plaque ajourée 21 associée à des barres de protection désignées par la référence générale 22, au niveau des moyens en forme de goulotte 6 de réception des produits.

On conçoit alors que cette structure de trémie présente un certain nombre d'avantages dans la mesure où elle est réalisée sous la forme de deux pièces distinctes ou séparées qui peuvent être manipulées séparément l'une de l'autre pour leur transport et leur nettoyage.

De plus, la portion de chargement des produits peut être orientée angulairement par rapport au reste de la trémie pour adapter la position angulaire des moyens en forme de goulotte par rapport au bâti de la machine et faciliter l'implantation de cette machine dans son environnement.

La sécurité d'utilisation de cette trémie est également assurée d'une part, par les moyens d'obturation partielle de la portion de chargement de celle-ci et d'autre part, par l'utilisation des moyens d'interdiction du démarrage de cette machine, tant que la portion de chargement de la trémie n'est pas en position correcte de montage sur la portion de guidage de celle-ci.

Il va de soi bien entendu que différents modes de réalisation de cette trémie peuvent être envisagés.

## Revendications

1. Trémie d'alimentation d'une machine de traitement de produits alimentaires, adaptée pour être fixée sur le bâti de la machine dans lequel sont disposés des moyens (3) de traitement des produits, la trémie (1) comportant dans sa partie supérieure une portion de chargement des produits (5) munie de moyens en forme de goulotte (6) de réception de ceux-ci, en saillie latérale par rapport au reste de la trémie et dans sa partie inférieure, une portion de guidage des produits (7) en direction des moyens de traitement (3) de ceux-ci, dans le bâti de la machine, caractérisée en ce que la portion de chargement (5) et la portion de guidage (2) de la trémie sont formées par deux pièces distinctes et séparées dont les bords en regard comportent des moyens complémentaires de fixation (10,11,12,13,14), démontables par un utilisateur pour permettre une séparation de celles-ci et autorisant différentes positions angulaires de montage de la portion de chargement des produits (5) par rapport à la portion de guidage de ceux-ci (7), pour permettre une adaptation de la position angulaire des moyens en forme de goulotte (6) par rapport au bâti de la machine, en ce que les moyens de fixation correspondants de la portion de chargement (5) de la trémie sont associés à une virole (12) disposée autour de celle-ci, en ce que cette portion de chargement peut être placée dans différentes positions angulaires par rapport à cette virole, et en ce que la virole (12) est associée à des moyens (17) d'interdiction du démarrage de la machine tant que la portion de chargement de la trémie (5) n'est pas en position correcte de montage sur la portion de guidage (7) de celle-ci.

2. Trémie selon la revendication 1, caractérisée en ce que les moyens complémentaires de fixation de la virole (12) et de la portion de guidage (7) de la trémie comprennent des verrous à franchissement de point dur (13), associés à l'une des pièces, virole (12) ou portion de guidage (7) de la trémie, et adaptés pour coopérer avec des moyens de butée complémentaires (14), associés à l'autre des pièces, portion de guidage (7) de la trémie ou virole (12).

3. Trémie selon la revendication 1 ou 2, caractérisée en ce que les moyens d'interdiction comprennent un détecteur de présence en position correcte de montage d'une tige (18) associée à la virole (12) de la portion de chargement (5) de la trémie.

4. Trémie selon la revendication 3, caractérisée en ce que la tige (18) est adaptée pour s'étendre dans une encoche (19) de la portion de guidage (7) de la trémie, lorsque la portion de chargement de celle-ci est en position correcte de montage sur la portion de guidage.

5. Trémie selon la revendication 3 ou 4, caractérisée en ce que le détecteur est associé au bâti de la machine.

6. Trémie selon l'une quelconque des revendications précédentes, caractérisée en ce que la portion de chargement (5) de la trémie est reliée à la virole (12) par des moyens de vissage autorisant la fixation de cette portion de chargement dans diverses orientations angulaires sur le virole.

7. Trémie selon l'une quelconque des revendications 1 à 5, caractérisée en ce que la portion de chargement (5) de la trémie est libre en rotation par rapport à la virole (12).

8. Trémie selon l'une quelconque des revendications précédentes, caractérisée en ce que la portion de chargement (5) de la trémie est associée à des moyens (20,21,22) d'obturation partielle de celle-ci autorisant le passage des produits, mais interdisant l'accès à l'intérieur de la trémie à un utilisateur.
